Europäisches Patentamt

European Patent Office

Office européen des brevets

(11) Veröffentlichungsnummer: **0 598 282 A1**

# (12) EUROPÄISCHE PATENTANMELDUNG

(21) Anmeldenummer: **93117818.0**

(22) Anmeldetag: **03.11.93**

(51) Int. Cl.5: **C09D 9/00**, C08B 11/193

(30) Priorität: **16.11.92 DE 4238627**

(43) Veröffentlichungstag der Anmeldung:
**25.05.94 Patentblatt 94/21**

(84) Benannte Vertragsstaaten:
**BE DE FR GB IT NL**

(71) Anmelder: **WOLFF WALSRODE AKTIENGESELLSCHAFT**

**D-29699 Walsrode(DE)**

(72) Erfinder: **Höhl, Frank**
**Brochdorf 52**
**D-29643 Neuenkirchen(DE)**
Erfinder: **Breckwoldt, Jörn, Dr.**
**Rostocker Strasse 55**
**D-27356 Rotenburg(DE)**
Erfinder: **Engelhardt, Jürgen, Dr.**
**An der Warnau 14**
**D-29699 Bomlitz(DE)**
Erfinder: **Kiesewetter, René, Dr.**
**Zum Ebsbusch 5**
**D-29614 Soltau(DE)**
Erfinder: **Lange, Werner, Dr.**
**Hinter dem Schützenholz 12**
**D-27374 Visselhövede(DE)**
Erfinder: **Szablikowski, Klaus, Dr.**
**Claudiusstrasse 5**
**D-29664 Walsrode(DE)**

(74) Vertreter: **Braun, Rolf, Dr. et al**
**Bayer AG**
**Konzernverwaltung RP**
**Patentabteilung**
**D-51368 Leverkusen (DE)**

(54) **Methylhydroxyalkylcelluloseether als Verdickungsmittel für Abbeizer.**

(57) Die Erfindung betrifft die Verwendung von Methylhydroxyalkylcellulosemischether, insbesondere Methylhydroxypropylcelluloseether (MHPC) und Methylhydroxyethyl-hydroxy-propylcelluloseether (MHEHPC), die - bei gegenüber dem Stand der Technik reduziertem Gesamtsubstitutionsgrad - in organischen Lösungsmitteln löslich sind als Verdunstungsverzögerer bzw. Verdickungsmittel für Abbeizer. Der Substitutionsgrad durch Methylgruppen liegt bei 1,6 bis 2,5, insbesondere 1,8 bis 2,4, derjenige durch Hydroxyalkyl-, insbesondere Hydroxypropylgruppen liegt bei <0,7, speziell <0,6, insbesondere <0,3.

Die Erfindung betrifft die Verwendung von Methylhydroxyalkylcellulosemischethern, insbesondere Methylhydroxypropylcelluloseether (MHPC) und Methylhydroxyethyl-hydroxypropylcelluloseether (MHEHPC), die als Verdunstungsverzögerer bzw. Verdickungsmittel für Abbeizer - bei gegenüber dem Stand der Technik reduziertem Gesamtsubstitutionsgrad - in organischen Lösungsmitteln löslich sind. Der Substitutionsgrad durch Methylgruppen liegt bei 1,6 bis 2,5, insbesondere 1,8 bis 2,4, derjenige durch Hydroxylalkyl-, insbesondere Hydroxypropylgruppen liegt bei <0,7, speziell <0,6, insbesondere <0,3.

Von den verschiedenen Celluloseethern, die als Verdicker für Abbeizer Verwendung finden, sind vor allem Alkylhydroxyalkylcelluloseether, insbesondere Ethylhydroxyethylcelluloseether (EHEC), Methylhydroxyethylcelluloseether (MHEC) und Methylhydroxypropylcelluloseether (MHPC), Ethylcellulose wie auch Hydroxyalkylcelluloseether, insbesondere Hydroxypropylcelluloseether (HPC) von Bedeutung.

Für den Einsatz von Celluloseethern in Abbeizmitteln sollten die Produkte aus ökonomischen Gründen niedrige Gesamtsubstitutionsgrade, möglichst hohe Viskositätsergiebigkeiten und gute Löslichkeiten in organischen Lösungsmitteln aufweisen. Die in Abbeizerformulierungen eingesetzten Cellulsoeether weisen alle thermische Flockpunkte auf, was ihre einfache Aufarbeitung mit heißem Wasser bedingt. Geringe Einsatzmengen an Reagenzien und hohe Ausbeuten sind bei der Umsetzung anzustreben, da dadurch die Menge an Reaktionsnebenprodukten gering gehalten wird und die Umwelt, insbesondere das Abwasser spürbar entlastet wird. Die den Abbeizmitteln beigemischten Celluloseether haben u.a. die Aufgabe, ein zu rasches Verdunsten der Lösungsmittel zu verhindern. Als Lösungsmittel werden in der Regel chlorierte Kohlenwasserstoffe in Kombination mit einem aliphatischen Alkohol, insbesondere Methanol, verwendet. Ein neuartiger Celluloseether sollte daher vor allem in ökologisch unbedenklichen, vorzugsweise methanolfreien Formulierungen einsetzbar sein.

Aus EP 0 456 101 A2 sind MHPCs bekannt, deren Löslichkeiten in organischen Lösungsmitteln durch Anhebung des Gesamtsubstitutionsgrades deutlich verbessert werden. Die hochsubstituierte MHPC ist thermoplastisch, in Wasser und organischen Lösungsmitteln löslich und besitzt Substitutionsgrade durch Methylgruppen von 1,5 bis 2,9 und Substitutionsgrade durch Hydroxypropylgruppen von 1,4 bis 1,9.

US-PS 3 351 583 beschreibt ein Verfahren zur Herstellung einer HPC. Die Umsetzung der Alkalicellulose mit Propylenoxid wird in einem Slurry-Medium vorgenommen, das bei der Aufarbeitung des Celluloseethers zurückgewonnen werden muß und dadurch einen ökonomischen Nachteil (hohe Investitionskosten) darstellt. Obendrein werden zufriedenstellende Löslichkeiten erst ab Substitutionsgraden von MS ca. 4,0 erhalten, was neben hohen Rohstoffkosten zu einer unvertretbar hohen Belastung des Wassers durch Reaktionsnebenprodukte führt.

US-PS 3 839 319 beschreibt ein Verfahren zur Herstellung einer MHPC mit Substitutionsgraden durch Methylgruppen von 0,2 bis 1,0 und Substitutionsgraden durch Hydroxypropylgruppen von >1,5. Die Produkte sind lediglich in Wasser sehr gut löslich und führen auf Grund ihrer Thermoplastizität zu Problemen bei der Reinigung bzw. Trocknung (siehe hierzu auch US-PS 4 614 545).

US-PS 3 388 082 beansprucht eine MHPC, die für verschiedene wasserlösliche Formulierungen verwendet werden kann. Die Substitutionsgrade durch Methylgruppen liegen bei 0,4 bis 1,3, diejenigen durch Hydroxypropylgruppen bei MS = 0,2 bis 1,4. Die niedrigsubstituierte MHPC zeigt keine Löslichkeit in organischen Lösungsmitteln.

US-PS 4 096 325 beschreibt die Herstellung einer MHPC mit Substitutionsgraden durch Methylgruppen von 1,0 bis 2,4 und Substitutionsgraden durch Hydroxypropylgruppen von MS = 2,5 bis 8,0. Die Celluloseether zeigen die bei hochsubstituierten MHPCs beobachtete gute Löslichkeit in organischen Lösungsmitteln.

Aus US-PS 4 614 545 ist eine MHPC bekannt, die bei Substitutionsgraden durch Methylgruppen von 1,5 bis ca. 2,5 und Substitutionsgraden durch Hydroxypropylgruppen von MS = 0,7 bis 2,0 keine Thermoplastizität mehr zeigen soll. Die beanspruchte MHPC ist in verschiedenen organischen Lösungsmitteln löslich. Die Löslichkeit in Ethanol wird als unbefriedigend bezeichnet (siehe hierzu EP 0 456 101 A2, Tabelle 3).

Die technische Aufgabe bestand darin, Methylhydroxyalkylcelluloseether, insbesondere Methylhydroxypropylcelluloseether (MHPC) als Verdicker bzw. Verdunstungsverzögerer für verschiedene Abbeizerformulierungen zur Verfügung zu stellen. Diese Produkte sollten bei gegenüber dem Stand der Technik niedrigen Gesamtsubstitutionsgraden gute verdickende Eigenschaften in vorzugsweise methanolfreien Formulierungen ergeben.

Überraschenderweise wurde gefunden, daß Methylhydroxyethyl-hydroxypropylcelluloseether (MHEHPC), insbesondere Methylhydroxypropylcelluloseether (MHPC) mit Substitutionsgraden durch Methylgruppen von 1,6 bis 2,5, insbesondere 1,8 bis 2,4, und Gesamtsubstitutionsgraden durch Hydroxyethyl- und Hydroxypropyl-, insbesondere Hydroxypropylgruppen von MS <0,7, speziell <0,6, als Verdicker für Abbeizmittel geeignet sind.

Die erfindungsgemäß einsetzbaren Celluloseether sind in einer Vielzahl von organischen Lösemitteln löslich bzw. wirken in ihnen verdickend. Bevorzugt sind aliphatische Alkohole, wie Methanol, Ethanol, Isopropanol, Butanol, Isobutanol, tertiär-Butanol; aliphatische und cycloaliphatische Ether, wie 1,4-Dioxan, Tetrahydrofuran; Carbonsäuren, wie Essigsäure; chlorierte Kohlenwasserstoffe, wie Chloroform, Dichlormethan; Amine, wie Pyridin; Amide, wie Methylformamid; schwefelhaltige, organische Lösemittel, wie Dimethylsulfoxid; aromatische Kohlenwasserstoffe in Verbindung mit aliphatischen Alkoholen, wie Toluol/Ethanol (80/20) oder binäre bzw. ternäre Gemische o.g. Lösungsmittel, wie z.B. tertiär-Butanol/Wasser; Glycerin/Wasser; Dichlormethan/Methanol; Dichlormethan/Ethanol; Dichlormethan/Butanol; Dichlormethan/Methanol/Ethylenglykol/Tetrachlorethylen.

Die erfindungsgemäß einsetzbaren Methylhydroxyalkylcellulosemischether, insbesondere MHPCs und MHEHPCs besitzen thermische Flockpunkte <100°C und lassen sich somit in einfacher Weise entsprechend dem Stand der Technik mit heißem Wasser reinigen. Die Produkte können entsprechend den in der Literatur angegebenen Verfahren synthetisiert werden (siehe z.B. US-PS 2 831 852; US-PS 2 949 452; US-PS 3 388 082; US-PS 4 410 693; US-PS 4 456 751 und EP 0 456 101 A2), wobei die Substitutionsgrade durch Änderung der Menge an einzusetzendem Reagenz (Alkali, Methylchlorid, Ethylenoxid, Propylenoxid) eingestellt werden (siehe Ausführungsbeispiel 1 und 2).

Die erfindungsgemäß einsetzbaren MHPCs sind in einer Vielzahl von wäßrigen und/oder organischen Lösungsmitteln löslich bzw. wirken in ihnen verdickend. Die gewünschte Endviskosität wird durch Ausschluß oder Zugabe von oxidierenden Substanzen, wie z.B. Luft, Wasserstoffperoxid, Metalloxiden, und die Auswahl der eingesetzten Zellstoffe eingestellt. Diese Einstellung der Endviskosität ist Stand der Technik und jedem Fachmann geläufig. Verwiesen sei in diesem Zusammenhang auf das Kapitel "Celluloseether" in Ullmanns Encyclopädie der technischen Chemie, Band 9, Seite 192 bis 212; Verlag Chemie, Weinheim, 1975. Mit der MHPC lassen sich Viskositäten von wäßrigen, wäßrig-organischen oder organischen Lösungsmitteln bzw. Lösungsmittelgemischen von 5.000 bis 180.000 mPa.s, insbesondere von 1.000 bis 150.000 mPa.s einstellen (2 gew.-%ige Lösung; Rotationsviskosimeter [Haake], Typ RV 100, System M 500, Meßeinrichtung MV, nach DIN 53 019 bei einem Schergefälle von D = 2,5 $s^{-1}$ und einer Temperatur von 20°C).

Als Cellulosen sind z.B. Chemiezellstoffe, insbesondere Linters-, Nadelholz-Sulfit-, Nadelholz-Sulfat- und/oder Laubholzzellstoffe, einsetzbar.

Die erfindungsgemäß verwendeten MHEHPs, insbesondere MHPCs weisen Substitutionsgrade durch Methylgruppen von 1,6 bis 2,5, insbesondere 1,8 bis 2,4, und Gesamtsubstitutionsgrade durch Hydroxyalkylgruppen, Hydroxyethyl- und Hydroxypropylgruppen, insbesondere Hydroxypropylgruppen von MS <0,7, speziell <0,6, auf und sind in organischen Lösungsmitteln bzw. Lösungsmittelgemischen, insbesondere in Kombinationen niederer Alkohole mit chlorierten Kohlenwasserstoffen, löslich bzw. haben verdickende Wirkungen. Die Produkte sind besonders zur Verdickung in Abbeizpasten geeignet.

Gegenüber dem Stand der Technik besitzen die erfindungsgemäß verwendeten MHEHPs, insbesondere MHPCs folgende Eigenschaften:

1. Löslichkeit in wäßrigen und/oder organischen Lösungsmitteln bzw. Lösungsmittelgemischen bei besonders niedrigem Gesamtsubstitutionsgrad.

2. Einfache Technologie zur Herstellung und Aufarbeitung der Cellulosemischether durch Reinigung mit heißem Wasser.

3. Ökonomische Synthese durch Einsatz geringer Mengen an Veretherungsmittel.

4. Reduzierter Eintrag von Reaktionsnebenprodukten in das Abwasser durch niedrigen Gesamtsubstitutionsgrad.

5. Löslichkeit bzw. verdickende Eigenschaften in methanolfreien Abbeizerformulierungen und dadurch bedingte Herabsetzung der Entflammbarkeit derartiger Systeme.

6. Stärker verdunstungsverzögernde Eigenschaften durch Einsatz schwerflüchtiger, toxikologisch unbedenklicher Komponenten in Abbeizerformulierungen.

7. Rezepturunabhängige, gleichbleibend hohe Viskositätsergiebigkeit für verschiedene Abbeizerformulierungen.

In den nachfolgenden Beispielen wird die Überlegenheit der eingesetzten MHEHPC, insbesondere MHPC gegenüber anderen als organolöslich beschriebenen Methylhydroxypropylcellulosen, Methylhydroxyethylcellulosen bzw. Ethylhydroxyethylcellulosen und Hydroxypropylcellulosen deutlich.

Die in den Beispielen angegebenen Begriffe haben die folgende Bedeutung:

1. DS:

Durchschnittsanzahl der in der Cellulose substituierten Hydroxylgruppen pro Anhydroglucoseeinheit.

MS:

Durchschnittsanzahl der Mole des mit der Cellulose kombinierten Reaktionspartners pro Anhydroglucoseeinheit.

2. Flockungspunkt:

Der Flockungspunkt wird bei 0,5 %igen Lösungen im 50 ml Becherglas bestimmt. Die Temperatur, bei der die erste Trübung eintritt, wird als Flockpunkt in °C angegeben. Durch die Flockpunktbestimmung wird die Temperaturbeständigkeit eines Cellulosethers in wäßrigen Systemen geprüft.

3. Viskosität:

2 gew.-%ige Lösung (Rotationsviskosimeter [Haake]: Typ RV 100, System M 500, Meßeinrichtung MV nach DIN 53 019, bei einem Schergefälle von D = 2,5 s$^{-1}$ und einer Temperatur von T = 20°C).

Als Celluloseether werden folgende handelsübliche Produkte verwendet:

1. Methylhydroxyethylcelluloseether (MHEC):

DS-Methyl = 1,82; MS-Hydroxyethyl = 0,49,

2. Methylhydroxyethylcellulose (MHEC):

DS-Methyl = 1,83; MS-Hydroxyethyl = 0,06,

3. Hydroxypropylcelluloseether (HPC):

MS-Hydroxypropyl = 5,25,

4. Methylhydroxypropylcelluloseether (MHPC):

DS-Methyl = 2,14; MS-Hydroxypropyl = 1,04,

5. Ethylhydroxyethylcelluloseether (EHEC):

DS-Ethyl = 1,43; MS-Hydroxyethyl = 1,83.

Zur Herstellung der verschiedenen Lösungen bzw. Abbeizerformulierungen werden 4 g des jeweiligen genau abgewogenen, luftgetrockneten Celluloseethers verlustfrei in die in einer Schraubdeckelglasflasche vorliegende Menge an Dichlormethan bzw. Wasser überführt (siehe Rezeptur). Das Gefäß wird verschlossen und intensiv geschüttelt. Nachfolgend wird die in der Rezeptur angegebene Menge an Additiv verlustfrei in die Dispersion eingegeben. Das Gefäß wird wiederum geschlossen und kräftig geschüttelt und eine Stunde auf eine rotierende Rollwalzeneinrichtung gelegt. Die Lösung wird auf 20°C in einem Temperierbad temperiert. Die Viskosität wird nachfolgend in einem Rotationsviskosimeter aufgenommen.

Folgende Rezepturen kommen zur Anwendung (% = Gew.-%):

Rezeptur A:

2 % Celluloseether; 98 % entionisiertes Wasser,

Rezeptur B:

2 % Celluloseether; 84,5 % Methylenchlorid;

8,5 % Methanol; 2,8 % Ethylenglykol,

2,2 % Tetrachlorethylen,

Rezeptur C:

2 % Celluloseether; 88 % Methylenchlorid;

10 % Methanol,

Rezeptur D:

2 % Cellulsoeether, 88 % Methylenchlorid;

10 % Ethanol,

Rezeptur E:

2 % Celluloseether; 88 % Methylenchlorid;

10 % Butanol,

Rezeptur F:

2 % Celluloseether; 88 % Methylenchlorid;

10 % Isobutanol.


Ausführungsbeispiel 1:


Methylhydroxypropylcelluloseether (MHPC)


In einem mit Inertgas gespülten 2-Liter-Druckautoklaven werden 89,8 Teile eines feingemahlenen Holzzellstoffes (Trockengehalt 90,3 %) mit 79,2 Teilen 50 %iger Natronlauge 80 min bei Raumtemperatur alkalisiert. Anschließend werden 43,6 Teile Propylenoxid aufgedüst und die Temperatur im Autoklaven innerhalb von 60 min auf 70°C erhöht. Bei dieser Temperatur werden 303 Teile Methylchlorid in das Reaktionsgefäß eingegeben. Nachfolgend wird innerhalb von 60 min auf 80°C erwärmt und 60 min bei dieser Temperatur verethert. Bei Raumtemperatur werden erneut 40 Teile Natriumhydroxid-Plätzchen und 303 Methylchlorid eingegeben. Nach 30 minütiger Alkalisierung bei Raumtemperatur wird innerhalb von 60 min auf 80°C erwärmt und weitere 60 min bei dieser Temperatur verethert. Anschließend wird auf Raumtemperatur abgekühlt.

Die Methylhydroxypropylcellulose wird mit heißem Wasser von Nebenprodukten gereinigt und getrocknet. Die MHPC besitzt einen Flockpunkt von 63°C und weist einen Substitutionsgrad durch Methylgruppen von 2,11 und einen molaren Substitutionsgrad (MS) durch Hydroxypropylgruppen von 0,3 auf. Die Viskosität einer 2 gew.-%igen, wäßrigen Lösung beträgt 19.330 mPa.s. Die mit der MHPC eingestellten Viskositäten verschiedener Abbeizerformulierungen sind in Tabelle 1 aufgeführt (hier: Celluloseether Nr. 6).

Ausführungsbeispiel 2:

Methylhydroxyethyl-hydroxypropylcelluloseether (MHEHPC)

In einem mit Inertgas gespülten 2-Liter-Druckautoklaven werden 85 Teile eines feingemahlenen Linterszellstoffes (Trockengehalt 95, 1 %) mit 79 Teilen 50 %iger Natronlauge 80 Minuten bei Raumtemperatur alkalisiert. Anschließend werden 8,8 Teile Ethylenoxid und 29 Teile Propylenoxid aufgedüst und die Temperatur im Autoklaven innerhalb von 60 Minuten auf 70°C erhöht. Bei dieser Temperatur werden 303 Teile Methylchlorid in das Reaktionsgefäß eingegeben. Nachfolgend wird innerhalb von 60 Minuten auf 80°C erwärmt und 60 Minuten bei dieser Temperatur verethert.

Die anschließende Methylierung erfolgt analog zu der im Ausführungsbeispiel 1 beschriebenen Umsetzung durch Zugabe von 40 Teilen Natriumhydroxid-Plätzchen und 303 Teilen Methylchlorid. Die Aufarbeitung entspricht der in Ausführungsbeispiel 1 erwähnten MHPC.

Die MHEHPC weist einen Substitutionsgrad durch Methylgruppen von 2,20, einen molaren Substitutionsgrad durch Hydroxyethylgruppen von 0,25 und einen molaren Substitutionsgrad durch Hydroxypropylgruppen von 0,33 auf. Die Viskosität einer 2 gew.-%igen, wäßrigen Lösung beträgt 49 990 mPas.

Die mit der MHEHPC eingestellten Viskositäten verschiedener Abbeizerformulierungen sind in Tabelle 1 aufgeführt (hier: Celluloseether Nr. 12).

In Tabelle 1 sind die Viskositäten der in den unterschiedlichen Rezepturen zur Anwendung kommenden Celluloseether aufgeführt.

5

**Tabelle 1:** Viskositäten handelsüblicher und erfindungsgemäß beanspruchter Celluloseether in verschiedenen Lösungsmitteln

| Cellulose-ether | DS-CH$_3$ | MS-Hydroxy-alkyl | Viskositäten (mPa.s) der verschiedenen Rezepturen | | | | | | Bemerkung |
|---|---|---|---|---|---|---|---|---|---|
| | | | A 1) | B | C | D | E | F | |
| 1. MHEC | 1,83 | 0,06 | 35.320 | 30.660 | 31.990 | 6.830 | 400 | <250 | Vergleich |
| 2. MHEC | 1,82 | 0,49 | 6.830 | 14.660 | 17.330 | 2.520 | <250 | <250 | Vergleich |
| 3. EHEC | 1,43 2) | 1,83 | 39.320 | - | 45.990 | 33.330 | 18.660 | 16.000 | Vergleich |
| 4. HPC | - | 5,25 | 22.660 | - | 29.330 | 47.320 | 57.320 | 65.320 | Vergleich |
| 5. MHPC | 2,14 | 1,04 | 42.660 | - | 40.660 | 39.320 | 39.990 | 41.990 | Vergleich |
| 6. MHPC | 2,11 | 0,30 | 19.330 | 22.660 | 22.660 | 23.990 | 24.660 | 25.330 | Erfindung |
| 7. MHPC | 2,09 | 0,08 | 18.000 | 26.660 | 29.330 | 25.990 | 24.660 | 27.330 | Erfindung |
| 8. MHPC | 2,01 | 0,31 | 24.660 | 25.990 | 29.330 | 29.330 | 37.990 | 39.990 | Erfindung |
| 9. MHPC | 1,90 | 0,29 | 26.660 | 28.660 | 30.000 | 39.320 | 43.320 | 47.320 | Erfindung |
| 10. MHPC | 1,80 | 0,29 | 28.660 | 29.990 | 37.320 | 43.320 | 41.320 | 50.650 | Erfindung |
| 11. MHPC | 2,03 | 0,14 | 17.330 | 22.660 | 22.660 | 18.660 | 18.660 | 18.660 | Erfindung |
| 12. MHEHPC | 2,20 | 0,58 3) | 45.990 | 46.660 | 43.990 | 47.990 | 47.320 | 47.320 | Erfindung |
| 13. MHEHPC | 1,99 | 0,39 4) | 83.310 | 77.980 | 87.310 | 81.310 | 75.320 | 77.310 | Erfindung |
| 14. MHEHPC | 2,11 | 0,38 5) | 66.650 | - | 65.980 | 63.980 | 67.980 | 69.320 | Erfindung |

1) Celluloseethereinwaage als vorher getrocknete Substanz
2) DS-Ethyl
3) Gesamtsubstitutionsgrad; MS-Hydroxypropyl: 0,33
4) Gesamtsubstitutionsgrad; MS-Hydroxypropyl: 0,17
5) Gesamtsubstitutionsgrad; MS-Hydroxypropyl: 0,16

## Patentansprüche

1. Verwendung von in Wasser und organischen Lösungsmitteln bzw. Lösungsmittelgemischen löslichen Methylhydroxyalkylcellulosemischethern, bei denen der durchschnittliche Gesamtsubstitutionsgrad (DS) durch Methylgruppen bei 1,6 bis 2,5 und der molare Gesamtsubstitutionsgrad (MS) durch Hydroxyalkylgruppen, bei <0,7 liegt, als Verdunstungsverzögerer bzw. Verdicker in Abbeizerformulierungen.

2. Verwendung gemäß Anspruch 1, dadurch gekennzeichnet, daß der Methylhydroxyalkylcellulosemischether ein Methylhydroxyethylhydroxypropylcelluloseether (MHEHPC) ist.

3. Verwendung gemäß Anspruch 1, dadurch gekennzeichnet, daß der Methylhydroxyalkylcellulosemischether ein Methylhydroxypropylcelluloseether (MHPC) ist.

4. Verwendung gemäß Anspruch 1 bis 3, dadurch gekennzeichnet, daß die MHEHPC, insbesondere MHPC einen durchschnittlichen Substitutionsgrad (DS) durch Methylgruppen von 1,8 bis 2,4 und einen molaren Gesamtsubstitutionsgrad (MS) durch Hydroxyalkyl-, Hydroxyethyl- und Hydroxypropyl-, insbesondere Hydroxypropylgruppen von <0,6, insbesondere <0,5, aufweist.

Europäisches Patentamt

**EUROPÄISCHER RECHERCHENBERICHT**

Nummer der Anmeldung

EP 93 11 7818

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | US-A-4 458 068 (WARNER & AL.) <br> * Spalte 4, Zeile 64 - Spalte 5, Zeile 35; Abbildung II * <br> * Ansprüche 1-6 * <br> --- | 1-4 | C09D9/00 <br> C08B11/193 |
| Y | RESEARCH DISCLOSURE <br> Bd. 273, Nr. 056 , 10. Januar 1987 , EMSWORTH, GB <br> ANONYMOUS 'Organo-soluble hydroxypropyl methylcellulose ether(s) - useful as thickeners for paint strippers' <br> --- | 1-4 | |
| A | WO-A-85 00373 (CMA CHEMICALS INC.) <br> * Ansprüche 1-12 * <br> --- | 1-4 | |
| A | DATABASE WPI <br> Section Ch, Week 8314, <br> Derwent Publications Ltd., London, GB; <br> Class A93, AN 83-33083K <br> 'Spray coating composition' <br> & JP-A-58 032 056 (SHINETSU CHEM IND KK) <br> 24. Februar 1983 <br> * Zusammenfassung * <br> ----- | 1-4 | RECHERCHIERTE SACHGEBIETE (Int.Cl.5) <br> C09D <br> C08B |

Der vorliegende Recherchenbericht wurde für alle Patentansprüche erstellt

| Recherchenort | Abschlußdatum der Recherche | Prüfer |
|---|---|---|
| DEN HAAG | 28. Februar 1994 | Oudot, R |